# EUROPEAN PATENT APPLICATION

(11) **EP 3 686 388 A1**
(43) Date of publication of application: **29.07.2020**
(21) Application number: 17925946.0
(22) Date of filing: 26.12.2017
(51) Int. Cl.: E05F 15/614, E05F 15/611, E05F 15/40, E06B 7/36

(54) **ELECTRIC DOUBLE PANEL INWARD GLIDING DOOR AND INWARD GLIDING DOOR DRIVING APPARATUS THEREOF**

(30) Priority: 20.09.2017 CN 201710853438; 20.09.2017 CN 201710853327
(71) Applicant: Nanjing Kangni Mechanical & Electrical Co., Ltd., Nanjing, Jiangsu 211100 (CN)
(72) Inventor: SHI, Xiang, Nanjing Jiangsu 211100 (CN); GU, Junhai, Nanjing Jiangsu 211100 (CN); ZU, Wenkai, Nanjing Jiangsu 211100 (CN); HUANG, Dongsheng, Nanjing Jiangsu 211100 (CN); WEI, Yuncheng, Nanjing Jiangsu 211100 (CN); GE, Hanqing, Nanjing Jiangsu 211100 (CN); DAI, Zuxin, Nanjing Jiangsu 211100 (CN); SHI, Xudong, Nanjing Jiangsu 211100 (CN)
(74) Representative: Hanna Moore + Curley
(86) International application number: PCT/CN2017/118521
(87) International publication number: WO 2019/056636

(57) **Abstract**

The present disclosure discloses electrically-operated inward-swing double doors and inward-swing door driving devices thereof. Each inward-swing door driving device includes a sector gear in coaxial transmission with a door shaft of the inward-swing door, a driving mechanism used for driving the sector gear to rotate, and an unlocking mechanism. The driving mechanism includes a motor gear and a motor driving the motor gear to rotate. The unlocking mechanism includes a cylinder, a cylinder push rod extending out of the cylinder, and a lock located at the end portion of the cylinder push rod. The tail end of the lock is in transmission connection with a wheel axle of the motor gear. The lock is provided with a lock rotating shaft for rotating horizontally around the lock. The lock rotating shaft is provided with an elastic element for applying twisting resilience force to the lock. When the cylinder is unlocked for air feeding, the cylinder push rod pushes the lock to rotate, so that the motor gear and the sector gear mesh with each other and twist the elastic element. When the cylinder is unlocked for air discharge, the lock rotates back under the action of the twisting resilience force of the elastic element and drives the motor gear and the sector gear to demesh. The present disclosure is more reliable in locking, good in mechanism stability and small in volume, and has a safe and reliable anti-pinch function.

## Description

### Technical Field

The present disclosure relates to a city public transport vehicle door driving device, and more particularly relates to electrically-operated inward-swing double doors and inward-swing door driving devices thereof.

### Background Art

Existing electrically-operated inward-swing double doors for coaches and buses usually use couplings or crank connecting rods to realize transmission of cylinders and door shafts, which is low in transmission efficiency, high in power without energy conservation and environmental protection. In addition, two door leaves of some door systems must be linked. In an emergency, if one door leaf is blocked, the other door leaf cannot be opened either, causing great safety hazards, and a driver cannot know a location and a cause of a fault when the fault occurs, which causes inconvenience in troubleshooting and recovery. In addition, existing swing doors sometimes pinch passengers when being closed. The existing swing doors are usually provided with sealing tapes at the closures. When the passengers are pinched, these tapes cause the passengers to be difficult to fast get out in an emergency due to too tight sealing. If a vehicle continues to run without taking measures after fingers or other objects are pinched, it will bring a great risk of accidents. There are also some swing doors having an untight sealing phenomenon easily after use in order to prevent such accidents or due to the setting defect of the sealing tapes, so that resistance will be caused to running of vehicles and the environments in the vehicles, resulting in low safety and unattractive appearance.

In addition, the existing electrically-operated inward-swing double doors, especially inward-swing door driving devices, still have the defects of large volume, large occupation of an air duct space, and small scope of application, and partial mechanisms that use cylinders for locking and unlocking are low in reliability and low in cylinder utilization efficiency. A connection way of driving mechanisms and vertical columns is low in reliability. Open-in-place and close-in-place switches are mostly integrated, which is not favorable for debugging and maintenance.

### Summary of the Invention

Invention objective: For the defects in the prior art, the present disclosure aims to provide electrically-operated inward-swing double doors which are relatively high in transmission efficiency, small in volume and easy to maintain, and inward-swing door driving devices thereof.

Technical solution: An inward-swing door driving device includes a sector gear in coaxial transmission with a door shaft of an inward-swing door, a driving mechanism used for driving the sector gear to rotate, and an unlocking mechanism used for separating the driving mechanism from the sector gear. The driving mechanism includes a motor gear and a motor driving the motor gear to rotate. The unlocking mechanism includes a cylinder, a cylinder push rod extending out of the cylinder, and a lock located at the end portion of the cylinder push rod. The tail end of the lock is in transmission connection with a wheel axle of the motor gear. The lock is provided with a lock rotating shaft for rotating horizontally around the lock. The lock rotating shaft is provided with an elastic element for applying twisting resilience force to the lock. When the cylinder is unlocked for air feeding, the cylinder push rod pushes the lock to rotate, so that the motor gear and the sector gear mesh with each other and twist the elastic element. When the cylinder is unlocked for air discharge, the lock rotates back under the action of the twisting resilience force of the elastic element and drives the motor gear and the sector gear to demesh.

Further, a door controller is further included. The driving mechanism and the unlocking mechanism are both mounted on a mounting plate. A trigger plate is also arranged on the mounting plate. A stop pin is arranged on the sector gear. The stop pin is in contact with the trigger plate. During door closing, the stop pin rotates along with the sector gear, and the stop pin pushes the trigger plate to trigger a close-in-place switch when the corresponding door is closed in place. The close-in-place switch sends a close-in-place signal to the door controller.

Further, the trigger plate includes a cam and a cam reset torsional spring mounted on a wheel axle of the cam. When the stop pin pushes the trigger plate to trigger the close-in-place switch, the cam reset torsional spring is twisted. During door opening, the stop pin rotates along with the sector gear, and the cam reset torsional spring drives the cam to rotate back to an initial position.

Further, a groove is formed in the mounting plate. The bottom portion of the lock rotating shaft is connected with a lock clamping plate. The tail end of the lock clamping plate is fixedly mounted in the groove through a fastening screw.

Further, the elastic element is a torsional spring, and the torsional spring sleeves the outer wall of the lock rotating shaft.

Further, a motor gear bearing is arranged on the wheel axle of the motor gear, and the motor gear bearing is fixedly connected with the tail end of the lock.

Further, the end portion, in contact with the lock, of the cylinder push rod is provided with an adjustment screw used for adjusting a meshing degree of the motor gear and the sector gear.

Further, the sector gear and the door shaft of the inward-swing door are connected through a spline shaft.

Further, the motor is a direct-current worm wheel and worm reducing motor. The motor is connected with a motor hall switch. The motor hall switch detects a position signal of the motor, and transmits the position signal to the door controller in real time.

Electrically-operated inward-swing double doors using the inward-swing door driving devices include two inward-swing door driving devices, and further include door shafts driven by the inward-swing door driving devices, and door leaves rotating along with the door shafts.

Further, the door controllers further monitor current changes of the motors. The door controllers determine whether the door leaves are blocked in the door opening and closing processes according to the position signals and the current changes of the motors, and control the driving devices to drive the door leaves to change motion states in case of blockage. In the door opening and closing processes, in case of an obstacle, the currents and hall positions of the motors may both change, so that the controller may realize an anti-pinch operation, thereby improving the safety and being sensitive to make a response.

Further, two centrosymmetric finger protection tapes are further included, which are respectively a left finger protection tape and a right finger protection tape. The left finger protection tape and the right finger protection tape are respectively connected with the two door leaves. Each finger protection tape includes a main body portion. One end of the main body portion extends towards a door slot to form an outer sealing lip, and the other end of the main body portion extends towards the door slot to form a sealing corner portion. The end portion of the sealing corner portion is inwards bent and extends to form an inner sealing lip. The outer sealing lip and the sealing corner portion are both connected with the main body portion through connecting ribs. The connecting ribs, the outer sealing lip and the main body portion are encircled to form a cavity, and the connecting ribs, the sealing corner portion and the main body portion are also encircled to form a cavity.

When the inward-swing double doors are closed, the outer sealing lip of the left finger protection tape and the sealing corner portion of the right finger protection tape are adjacent to each other, the outer sealing lip of the right finger protection tape and the sealing corner portion of the left finger protection tape are adjacent to each other, and the inner sealing lip of the left finger protection tape and the inner sealing lip of the right finger protection tape are adjacent to each other.

Further, when the inward-swing double doors are closed, the outer sealing lip of the left finger protection tape and the sealing corner portion of the right finger protection tape are in interference fit with each other, the outer sealing lip of the right finger protection tape and the sealing corner portion of the left finger protection tape are in interference fit with each other, and the inner sealing lip of the left finger protection tape and the inner sealing lip of the right finger protection tape are in interference fit with each other.

Further, handrails are arranged on the door leaves to facilitate the getting on and off of passengers.

Beneficial effects: the driving devices of the present disclosure use a modularization design, have a small number of parts, and are simple in structure, convenient to assemble and small in volume. All the components are assembled on the mounting plates, and the mounting plates can be fixed on a vehicle body through transitional brackets, so that the driving devices can adapt to vehicle bodies with different structures by changing the transitional structures. The cylinders are used to realize locking and unlocking, so as to satisfy remote emergency unlocking of a driver. The locks can be locked through relatively small cylinders by using the principle that the connecting rods pass through dead points and a "dead point" approaching structure, so that loads on the cylinders are reduced, the locking is more reliable, and the mechanisms are good in stability. Gear separation type clutches are used, so that unlocking is convenient and reliable. The motors are the direct-current worm wheel and worm reducing motors, which have a self-locking function to realize locking in the whole process. The spline shafts are used to connect with the vertical columns, so that torque transmission is reliable, and the maintenance is convenient. The finger protection tapes are of a novel sealing structure and good in triple sealing effect, which cannot pinch the passengers, are also convenient for the passengers to withdraw hands in time, and are high in safety and attractive in appearance.

### Brief Description of the Drawings

- Fig. 1: is a schematic diagram of a driving device of the present disclosure;
- Fig. 2: is a schematic diagram of an unlocking mechanism of the present disclosure;
- Fig. 3: is a schematic diagram of switch triggering of the present disclosure;
- Fig. 4: is a partial schematic diagram of the present disclosure;
- Fig. 5: is a schematic structure diagram of the present disclosure; and
- Fig. 6: is a schematic diagram of a finger protection tape.

### Detailed Description of the Invention

The technical solutions are described in detail below through an optimal embodiment and in combination with the accompanying drawings.

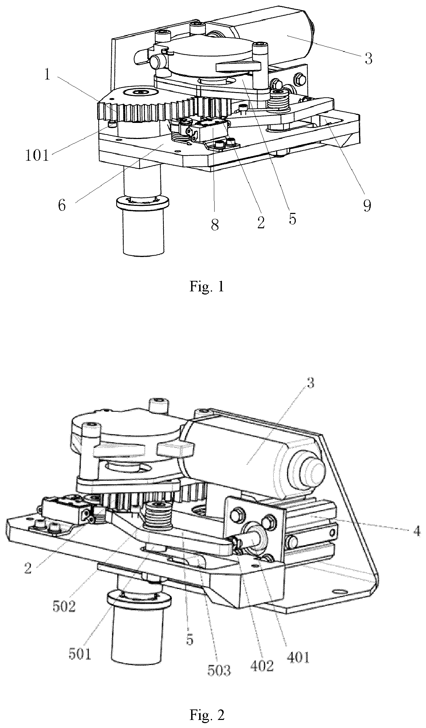

As shown in Figs. 1 to 3, electrically-operated inward-swing double doors and inward-swing door driving devices are provided. The inward-swing door driving devices are used for driving inward-swing doors to open/close, and the electrically-operated inward-swing double doors include door shafts 11, door leaves 12 rotating along with the door shafts 11, and two driving devices for driving the door shafts 11 to rotate. Each driving device is used for driving the corresponding inward-swing door to open/close, and includes a door controller, a sector gear 1 in coaxial transmission with the door shaft 11 of the inward-swing door, a driving mechanism used for driving the sector gear 1 to rotate, and an unlocking mechanism used for separating the driving mechanism from the sector gear 1. The sector gear 1, the driving mechanism and the unlocking mechanism are all mounted on a mounting plate 6. The sector gear 1 is connected with the door shaft 11 of the inward-swing door through a spline shaft 10.

The driving mechanism includes a motor gear 2 and a motor 3 driving the motor gear 2 to rotate. The unlocking mechanism includes a cylinder 4, a cylinder push rod 401 extending out of the cylinder 4, and a lock 5 located at the end portion of the cylinder push rod 401. The end portion, in contact with the lock 5, of the cylinder push rod 401 is provided with an adjustment screw 402 used for adjusting a meshing degree of the motor gear 2 and the sector gear 1. The tail end of the lock 5 is in transmission connection with a wheel axle of the motor gear 2. As shown in the figures, a stress point of the motor gear 2 is close to the rotating center of the lock 5, so that by the use of the principle that a connecting rod passes through a dead point and a "dead point" approaching structure, the relatively small cylinder 4 may realize relatively high locking force. The lock 5 may rotate around a lock rotating shaft 501. One end of an arm of each of the two locks 5 forming an obtuse angle at the lock rotating shafts 501, is in contact with the cylinder push rod 401, and the other end is in transmission with the motor gear 2, and this end is the "tail end".

In the present embodiment, a motor gear bearing is arranged on the wheel axle of the motor gear 2, and the motor gear bearing is fixedly connected with the tail end of the lock 5.

The lock rotating shaft 501 used for rotating horizontally around the lock 5 is arranged on the lock 5. An elastic element for applying twisting resilience force to the lock 5 is arranged on the lock rotating shaft 501. In the present embodiment, the elastic element is a torisonal spring 502. The torsional spring 502 sleeves the outer wall of the lock rotating shaft 501. When the cylinder 4 is unlocked for air feeding, the cylinder push rod 401 pushes the lock 5 to rotate, so that the motor gear 2 and the sector gear 1 mesh with each other and twist the elastic element. When the cylinder 4 is unlocked for air discharge, the lock 5 rotates back under the action of the twisting resilience force of the elastic element and drives the motor gear 2 and the sector gear 1 to demesh. A groove 9 is formed in the mounting plate 6. The bottom portion of the lock rotating shaft 501 is connected with a lock clamping plate 503. The tail end of the lock clamping plate 503 is fixedly mounted in the groove 9 through a fastening screw.

A trigger plate 7 is also arranged on the mounting plate 6. A stop pin 101 is arranged on the sector gear 1. The stop pin 101 is in contact with the trigger plate 7. During door closing, the stop pin 101 rotates along with the sector gear 1, and the stop pin 101 pushes the trigger plate 7 to trigger a close-in-place switch 8 when the corresponding door is closed in place. The close-in-place switch 8 sends a close-in-place signal to the door controller. The trigger plate 7 includes a cam and a cam reset torsional spring 701 mounted on a wheel axle of the cam. When the stop pin 101 pushes the trigger plate 7 to trigger the close-in-place switch 8, the cam reset torsional spring 701 is twisted. During door opening, the stop pin 101 rotates along with the sector gear 1, and the cam reset torsional spring 701 drives the cam to rotate back to an initial position.

In the present embodiment, the motor 3 is a direct-current worm wheel and worm reducing motor 3. The motor 3 is connected with a motor hall switch. The motor hall switch detects a position of the motor 3, and transmits a position signal to the corresponding door controller in real time. The door controller further monitors a current change of the motor 3. The door controller determines whether the corresponding door leaf 12 is blocked in the door opening and closing processes according to the position signal and the current change of the motor 3, and controls the driving device to drive the door leaf 12 to change a motion state in case of blockage. In the door opening and closing processes, in case of an obstacle, the current and hall position of the motor 3 may both change, so that the controller may realize an anti-pinch operation, thereby improving the safety and being sensitive to make a response.

Further, handrails are also arranged on the door leaves 12 to facilitate the getting on and off of passengers. Microswitches are mounted at open-in-place positions of the inward-swing doors. The microswitches are connected with the door controllers. The door controllers determine whether the doors are opened in place according to current signals and signals of the microswitches.

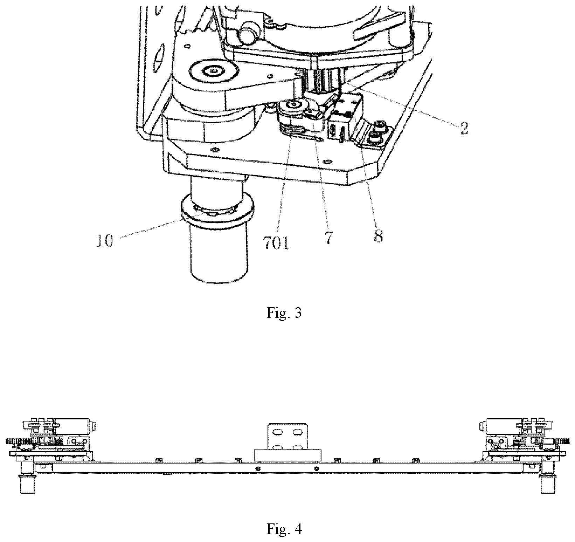

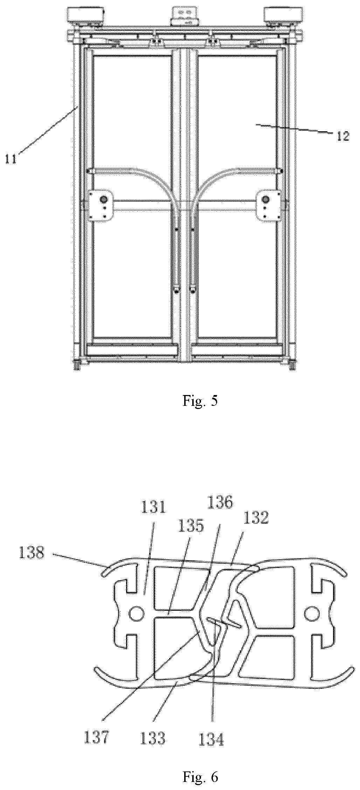

The overall schematic diagram of the present disclosure is shown in Figs. 4 and 5. The working principles during door opening/door closing/emergency unlocking are as follows.

### 1. Electrically-operated door closing:

When the doors are in open states, air is fed into the cylinders 4, and the cylinder push rods 401 push the locks 5 to rotate to push the motor gears 2 to move towards the sector gears 1 to cause the two gears to mesh with each other. The adjustment screws 402 on the cylinder push rods 401 are adjusted to adjust a gear meshing clearance, so that the gears may mesh well.

The motors 3 are driven to rotate clockwise to drive the motor gears 2, thereby driving the sector gears 1 to rotate.

The sector gears 1 drive the door shafts 11 connected to the sector gears 1 through the spline shafts 10 to rotate, so as to realize the electrically-operated door closing.

The stop pins 101 on the sector gears 1 push the trigger plates 7 to trigger switch components, and the switch components output signals to the door controllers to cause the door controllers to complete a door closing action.

### 2. Electrically-operated door opening:

When the doors are in closed states, air is fed into the cylinders 4, and the cylinder push rods 401 push the locks 5 to rotate to push the motor gears 2 to move towards the sector gears 1 to cause the two gears to mesh with each other. The adjustment screws 402 on the cylinder push rods 401 are adjusted to adjust a gear meshing clearance, so that the gears may mesh well.

The motors 3 are driven to rotate anticlockwise to drive the motor gears 2, thereby driving the sector gears 1 to rotate.

The sector gears 1 drive the door shafts 11 connected to the sector gears 1 through the spline shafts 10 to rotate, so as to realize the electrically-operated door opening.

### 3. Manual door closing:

When the doors are in the open states, air is discharged from the cylinders 4, and the locks 5 are reset under the action of the lock 5 reset torisonal springs 701, and at the same time, the cylinder push rods 401 retract to cause the motor gears 2 and the sector gears 1 to demesh.

The doors are closed manually in place.

The air is fed into the cylinders 4, so that the motor gears 2 and the sector gears 1 mesh with each other to realize locking.

### 4. Emergency unlocking and manual door opening:

When the doors are in the closed states, emergency unlocking devices are operated to cause the cylinders 4 to discharge air, and the locks 5 are reset under the action of the lock 5 reset torisonal springs 701, and at the same time, the cylinder push rods 401 retract to cause the motor gears 2 and the sector gears 1 to demesh.

The door opening action is completed manually.

5. Locking in the whole process: at any position, the air is fed into the cylinders 4, and the motor gears 2 and the sector gears 1 mesh with each other, so that locking at any position is realized through a self-locking function of the worm wheel and worm motors 3.

In addition, as shown in Fig. 6 and Fig. 7, a left finger protection tape and a right finger protection tape of the present disclosure are illustrated. The figures are top views of the left finger protection tape and the right finger protection tape in central symmetry. The left finger protection tape and the right finger protection tape are respectively connected with the two door leaves 12. Each finger protection tape includes a main body portion 131. One end, i.e., the upper end in the figure, of the main body portion 131 of the left finger protection tape extends towards a door slot to form an outer sealing lip 132, and the other end, i.e., the lower end in the figure, of the main body portion 131 extends towards the door slot to form a sealing corner portion 133. Two ends of the main body portion 131 both extend towards a door plate to form door plate lips 138 that cover a glass adhesion surface of the door plate.

The end portion of the sealing corner portion 133 is inwards bent and extends to form an inner sealing lip 134. The outer sealing lip 132 and the sealing corner portion 133 are both connected with the main body portion 131 through connecting ribs. The connecting ribs, the outer sealing lip 132 and the main body portion 131 are encircled to form a cavity, and the connecting ribs, the sealing corner portion 133 and the main body portion 131 are also encircled to form a cavity.

The connecting ribs include a main connecting rib 135 connected with the main body portion 131, and an outer connecting rib 136 and a corner connecting rib 137 extending out of the main connecting rib 135. The outer connecting rib 136 is connected to the outer sealing lip 132, and the corner connecting rib 137 is connected to the sealing corner portion 133.

A through hole is formed in the center of the main body portion 131. The main body portion 131 is provided with a connecting portion assembled with the door plate at a contact position with the door plate.

When the inward-swing double doors are closed, the outer sealing lip 132 of the left finger protection tape and the sealing corner portion 133 of the right finger protection tape are adjacent to each other, the outer sealing lip 132 of the right finger protection tape and the sealing corner portion 133 of the left finger protection tape are adjacent to each other, and the inner sealing lip 134 of the left finger protection tape and the inner sealing lip 134 of the right finger protection tape are adjacent to each other. In the present embodiment, the outer sealing lip 132 of the left finger protection tape and the sealing corner portion 133 of the right finger protection tape are in interference fit with each other, the outer sealing lip 132 of the right finger protection tape and the sealing corner portion 133 of the left finger protection tape are in interference fit with each other, and the inner sealing lip 134 of the left finger protection tape and the inner sealing lip 134 of the right finger protection tape are in interference fit with each other, so as to achieve a better sealing effect.

The total width of a structure formed by matching the left finger protection tape and the right finger protection tape is less than 90 mm. When the door system is closed, in case of an obstacle, the cavities of the finger protection tapes will be compressed. Since a spacing between the cavities of the left and right finger protection tapes is smaller, the detection of smaller obstacles can be realized, and the width of a minimum obstacle detection object is 10 mm. After a smaller obstacle is pinched, the cavities are compressed to avoid pinch injury, and the obstacle can be easily pulled out. In addition, handrails are also arranged on the door leaves.

The above is only a preferred implementation mode of the present disclosure. It should be noted that those of ordinary skill in the art can further make several improvements and retouches without departing from the principle of the present disclosure. These improvements and retouches shall all fall within the protection scope of the present disclosure.

## Claims

1. An inward-swing door driving device, comprising a sector gear (1) in coaxial transmission with a door shaft of an inward-swing door, a driving mechanism used for driving the sector gear (1) to rotate, and an unlocking mechanism used for separating the driving mechanism from the sector gear (1), wherein the driving mechanism comprises a motor gear (2) and a motor (3) driving the motor gear (2) to rotate; the unlocking mechanism comprises a cylinder (4), a cylinder push rod (401) extending out of the cylinder (4), and a lock (5) located at the end portion of the cylinder push rod (401); the tail end of the lock (5) is in transmission connection with a wheel axle of the motor gear (2); the lock (5) is provided with a lock rotating shaft (501) for rotating horizontally around the lock (5); the lock rotating shaft (501) is provided with an elastic element for applying twisting resilience force to the lock (5); when the cylinder (4) is unlocked for air feeding, the cylinder push rod (401) pushes the lock (5) to rotate, so that the motor gear (2) and the sector gear (1) mesh with each other and twist the elastic element; and when the cylinder (4) is unlocked for air discharge, the lock (5) rotates back under the action of the twisting resilience force of the elastic element and drives the motor gear (2) and the sector gear (1) to demesh.

2. The inward-swing door driving device according to claim 1, further comprising a door controller, wherein the driving mechanism and the unlocking mechanism are both mounted on a mounting plate (6); a trigger plate (7) is also arranged on the mounting plate (6); a stop pin (101) is arranged on the sector gear (1); the stop pin (101) is in contact with the trigger plate (7); during door closing, the stop pin (101) rotates along with the sector gear (1), and the stop pin (101) pushes the trigger plate (7) to trigger a close-in-place switch (8) when each corresponding door is closed in place; and the close-in-place switch sends a close-in-place signal to the door controller.

3. The inward-swing door driving device according to claim 2, wherein the trigger plate (7) comprises a cam and a cam reset torsional spring (701) mounted on a wheel axle of the cam; when the stop pin (101) pushes the trigger plate (7) to trigger the close-in-place switch, the cam reset torsional spring (701) is twisted; and during door opening, the stop pin (101) rotates along with the sector gear (1), and the cam reset torsional spring (701) drives the cam to rotate back to an initial position.

4. The inward-swing door driving device according to claim 2, wherein a groove (9) is formed in the mounting plate (6); the bottom portion of the lock rotating shaft (501) is connected with a lock clamping plate (503); and the tail end of the lock clamping plate (503) is fixedly mounted in the groove (9) through a fastening screw.

5. The inward-swing door driving device according to claim 1, wherein the elastic element is a torsional spring (502), and the torsional spring (502) sleeves the outer wall of the lock rotating shaft (501).

6. The inward-swing door driving device according to claim 1, wherein a motor gear bearing is arranged on the wheel axle of the motor gear (2), and the motor gear bearing is fixedly connected with the tail end of the lock (5).

7. The inward-swing door driving device according to claim 1, wherein the end portion, in contact with the lock (5), of the cylinder push rod (401) is provided with an adjustment screw (402) used for adjusting a meshing degree of the motor gear (2) and the sector gear (1).

8. The inward-swing door driving device according to claim 1, wherein the sector gear (1) and the door shaft of the inward-swing door are connected through a spline shaft (10).

9. The inward-swing door driving device according to claim 2, wherein the motor (3) is a direct-current worm wheel and worm reducing motor (3); the motor (3) is connected with a motor hall switch; and the motor hall switch detects current of the motor (3), and transmits a current signal to the door controller in real time.

10. Electrically-operated inward-swing double doors using the inward-swing door driving devices according to any one of claims 1 to 9, comprising two inward-swing door driving devices, and further comprising door shafts (11) driven by the inward-swing door driving devices, and door leaves (12) rotating along with the door shafts (11).

11. The electrically-operated inward-swing double doors according to claim 10, wherein the door controllers are further used for monitoring current changes of the motors (3); the door controllers determine whether the door leaves (12) are blocked in the door opening and closing processes according to position signals and the current changes of the motors (3), and control the driving devices to drive the door leaves (12) to change motion states in case of blockage.

12. The electrically-operated inward-swing double doors according to claim 10, further comprising two centrosymmetric finger protection tapes, respectively being a left finger protection tape and a right finger protection tape, wherein the left finger protection tape and the right finger protection tape are respectively connected with the two door leaves (12); each finger protection tape comprises a main body portion (131); one end of the main body portion (131) extends towards a door slot to form an outer sealing lip (132), and the other end of the main body portion (131) extends towards the door slot to form a sealing corner portion (133); the end portion of the sealing corner portion (133) is inwards bent and extends to form an inner sealing lip (134); the outer sealing lip (132) and the sealing corner portion (133) are both connected with the main body portion (131) through connecting ribs; the connecting ribs, the outer sealing lip (132) and the main body portion (131) are encircled to form a cavity, and the connecting ribs, the sealing corner portion (133) and the main body portion (131) are also encircled to form a cavity;
when the inward-swing double doors are closed, the outer sealing lip (132) of the left finger protection tape and the sealing corner portion (133) of the right finger protection tape are adjacent to each other, the outer sealing lip (132) of the right finger protection tape and the sealing corner portion (133) of the left finger protection tape are adjacent to each other, and the inner sealing lip (134) of the left finger protection tape and the inner sealing lip (134) of the right finger protection tape are adjacent to each other.

13. The electrically-operated inward-swing double doors according to claim 12, wherein when the inward-swing double doors are closed, the outer sealing lip (132) of the left finger protection tape and the sealing corner portion (133) of the right finger protection tape are in interference fit with each other, the outer sealing lip (132) of the right finger protection tape and the sealing corner portion (133) of the left finger protection tape are in interference fit with each other, and the inner sealing lip (134) of the left finger protection tape and the inner sealing lip (134) of the right finger protection tape are in interference fit with each other.

14. The electrically-operated inward-swing double doors according to claim 10, wherein handrails are arranged on the door leaves.
